# EUROPEAN PATENT APPLICATION

(11) **EP 0 891 889 A1**
(43) Date of publication of application: **20.01.1999**
(21) Application number: 97850113.8
(22) Date of filing: 14.07.1997
(51) Int. Cl.: B60P 1/00, B60S 9/04, B65D 90/14

(54) **Support leg arrangement**

(71) Applicant: LAGAB AB, S-312 22 Laholm (SE)
(72) Inventor: Broqvist, Jan, 312 32 Laholm (SE); Andersson, Holger, 312 95 Laholm (SE)
(74) Representative: Berglund, Gustav Arthur

(57) **Abstract**

An arrangement in a support leg (1) for a load carrier, such as a loading platform, said support leg (1) being connected to a hinge means (2) for movement between an inwards folded and an outwards folded position merely by pivoting. The device comprises a locking device for locking the support leg (1) in the outwards folded position thereof, said locking device comprising a first locking means (4) mounted on the support leg (1) in such a manner as to be movable along the longitudinal axis (6) thereof, and a second locking means (8) matching the first locking means (4) and formed in the hinge means (2). The first locking means (4) is arranged, by cooperation with the hinge means (2), to be displaced along the longitudinal axis (6) of the support leg (1) upon pivoting outwards of the support leg (1), for engagement with the second locking means (8) and thus effect said locking.

## Description

### Technical Field

The subject invention relates to an arrangement in support legs for a replaceable load carrier, such as a loading platform, for loading trucks, and more particularly to an arrangement in a support leg that is connected to a hinge means for movement between an inwards folded and an outwards folded position merely by pivoting.

### Background of the Invention

Certain trucks have detachable loading platforms allowing efficient transportation and handling of goods. The loading platform may accompany the truck for transportation purposes and also be deposited on the ground for loading/unloading purposes while the truck may fetch another platform. To deposit the platform on the ground the truck initially raises the platform by means of a hoisting device whereupon support legs provided on the platform are folded outwards and downwards and are locked in that position. Normally, a platform is formed with four support legs, one at each corner of the load carrier. As a rule, the support legs are telescopically extensible to allow adjustment to the desired height of deposition and they are also displaceable laterally outwards relative to the platform for convenient movement of the truck chassis underneath the platform. The truck then lowers the platform which thus is supported on its support legs. The truck may then drive away.

A common type of support legs are connected to a hinge means on a load carrier for movement between an inwards folded and an outwards folded position merely by pivoting. A support leg of this kind is described in US-4,076,299 and is locked in the outwards folded position by manual actuation of a locking means locking the support leg relative to the load carrier. This type of support leg is inexpensive and safe hut suffers from the drawback of being complicated to handle because of the necessity to lock the support leg manually.

For this reason other types of support legs have been developed which like the above-mentioned first type of legs are connected to a load carrier mounted hinge means for pivotal movement between an inwards folded and an outwards folded position. The feature distinguishing this type of support leg from the previous one is the automatic locking of the leg as the latter reaches its outwards folded position. The automatic locking feature is achieved by making the leg movable also lengthwise, allowing the leg to he displaced in its longitudinal direction while being pivoted to its outwards folded position. Owing to this arrangement, a suitable spring means may displace the entire support leg in the longitudinal direction thereof when the support leg has reached its outwards folded position, towards a position wherein the support leg is locked. Support legs of this kind are described in SE-442,281, SE-461,964 and WO-97/17 065. The advantage of this type of support leg is that it is easier to handle owing to the automatic locking of the leg that is associated with the outwards movement of the leg. A disadvantage inherent in this type of support leg is however that the mechanism effecting the longitudinal displacement of the leg and the means locking the leg in the outwards folded position are comparatively complicated constructions, with consequential comparatively high support leg manufacturing costs. In addition, when one wishes to raise the load carrier, there is a risk that the leg may stick to the ground and for instance may freeze fast thereto. As a result, the leg might he pulled out of its locked position, and upon subsequent lowering of the load carrier there is a risk that the leg remains unlocked with the possible consequence of the support leg buckling and the load carrier tipping over.

### Summary of the Invention

The object of the invention is to provide an arrangement in support legs, which arrangement allows simple handling of the support leg, i.e. automatic locking thereof in connection with the outwards folding movement thereof, and eliminates the above-mentioned risk that the leg he pulled out of its locked position upon raising of the load carrier. Preferably, the arrangement is of simple construction and the manufacturing costs thereof consequently comparatively low.

The object is achieved by an arrangement possessing the characteristic features defined in claim 1. Advantageous embodiments of the arrangement appear from the dependent claims.

Thus, the invention provides an arrangement in a support leg for a load carrier, such as a loading platform, said support leg being connected to a hinge means for movement between an inwards folded and an outwards folded position merely by pivoting, said arrangement comprising a locking device for locking the support leg in the outwards folded position thereof, said arrangement being characterised in that the locking device comprises a first locking means mounted on the support leg in such a manner as to be movable along the longitudinal axis of said leg, and a second locking means matching the first locking means and formed in the hinge means, said first locking means being arranged, by cooperation with the hinge means, to be displaced along the longitudinal axis of the support leg upon pivoting outwards of the support leg, for engagement with the second locking means and thus effect said locking.

As mentioned previously the support leg is connected to the load carrier for movement between an inwards folded and an outwards folded position merely by pivoting. Consequently, the leg is not movable lengthwise, eliminating the above risk that the leg be pulled out of its locked position. In addition, locking of the support leg is achieved by displacement of a first locking means in the longitudinal direction of the support leg as the support leg is being pivoted to its outwards folded position, for engagement of the first locking means with a second locking means when the support leg has reached its outwards folded position. As a result, the arrangement in accordance with the invention provides for automatic locking of the support leg in connection with the outwards folding movement. The fact that only the first locking means is displaced and not the entire support leg, as in the prior-art type of support leg having automatic locking, makes it possible to simplify the structure of the locking device. Consequently, it also becomes possible to reduce the manufacturing costs thereof.

In accordance with a preferred embodiment of the invention a force-exerting means acts on the first locking means to retain the latter in engagement with the second locking means when the support leg assumes its outwards folded position. Consequently the first locking means cannot be detached from the second one, a feature providing reliable locking of the support leg. Preferably, the force-exerting means is a tension spring acting between the first locking means and the upper end of the support leg.

In accordance with another preferred embodiment of the invention the force-exerting means is arranged to urge the first locking means into engagement with a curved cam face formed on the hinge means. Owing to this feature guides are provided, controlling the displacement of the first locking means in the longitudinal direction of the support leg during the pivoting outwards of the support leg.

Further preferred embodiments are described in the dependent claims.

In the following, a preferred embodiment of the invention will be described with reference to the accompanying drawings.

### Brief Description of the Drawings

Fig. 1 is a front view, partly in section, of one embodiment of the invention, showing the support leg in an inwards folded position.
Fig. 2 is a front view, partly in section, of the embodiment in Fig. 1, showing the support leg in a position intermediate the inwards folded position and an outwards folded position.
Fig. 3 is a front view, partly in section, of the embodiment in Fig. 1, wherein the support leg assumes its outwards folded position.
Fig. 4 is a lateral view of the embodiment in Fig. 1 showing the support leg in the outwards folded position.
Fig. 5 is a front view, partly in section, of the embodiment in Fig. 1, showing a handle actuated for releasing the support leg from the locked condition thereof.
Fig. 6 is an enlarged part view of the front view of Fig. 1.
Fig. 7 is a cross-sectional view on line I-I in Fig. 6.
Fig. 8 is a front view of one embodiment of the invention, illustrating the support leg in an inwards folded position and comprising a safety device which in the outwards folded position of the support leg retains a locking device in a locked position in the case of a breakdown of a force-exerting means.
Fig. 9 is a front view of the embodiment in Fig. 8, illustrating the support leg in a position intermediate the inwards folded position and an outwards folded position.
Fig. 10 is a front view of the embodiment in Fig. 8, illustrating the support leg in a position intermediate the inwards folded position and an outwards folded position.
Fig. 11 is a front view of the embodiment in Fig. 8, illustrating the support leg in an outwards folded position.

### Description of one Embodiment

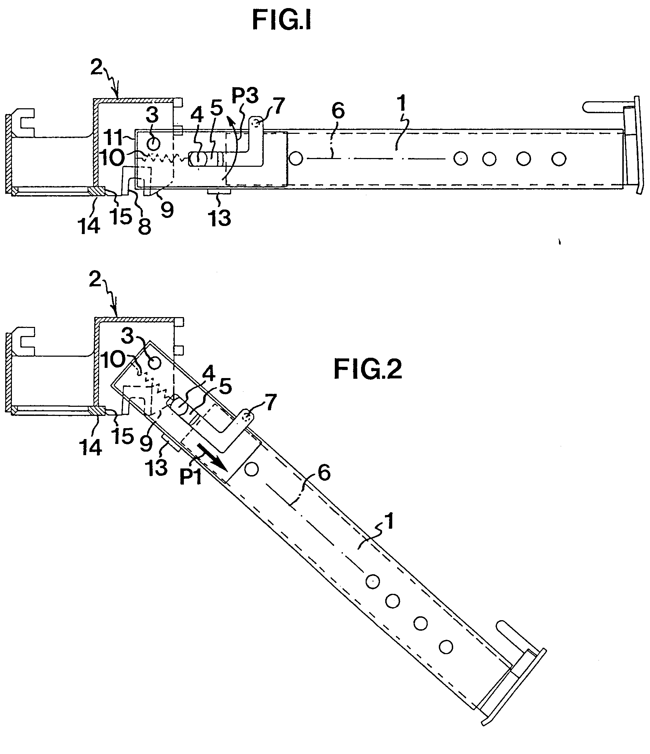

Fig. 1, to which reference is made, illustrates a support leg 1 connected to a hinge means 2 via a pivot pin 3 and illustrated in an inwards folded position. The hinge means 2 is intended to he mounted on a replaceable load carrier, not shown, such as a loading platform. Preferably, the hinge means 2 is so mounted on the load carrier that it may be displaced in the lateral direction of the load carrier. This arrangement allows the hinge means 2 to be extended relative to the load carrier in connection with the folding outwards of the support leg 1 in order to increase the spacing between two support legs positioned one on either side of the load carrier, an arrangement which facilitates the movements of the chassis of a truck underneath the load carrier.

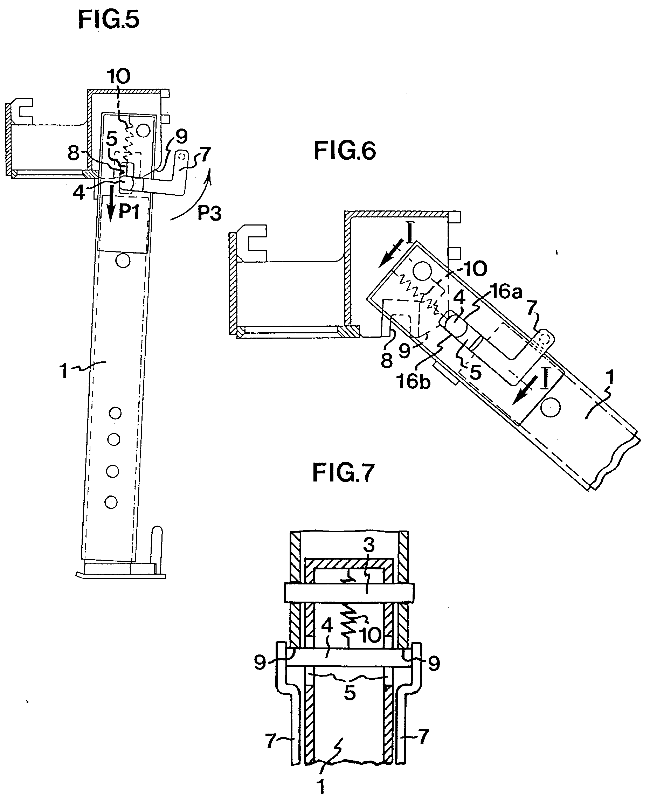

Fig. 1 also illustrates a locking device, more clearly shown in Figs 6 and 7 and comprising a first locking means in the form of a shaft 4 extending transversely through the support leg 1 widthwise with respect to the load carrier via two elongate apertures 5, only one of which appears from Fig. 1, formed in opposed sides of the support leg 1 and extending in the longitudinal axis 6 of the support leg 1. Owing to this engagement, the shaft 4 is movable along the longitudinal axis 6 of the support leg 1. The shaft 4 supports a handle 7 the function of which will be explained further on. In addition, the locking device comprises a second locking means in the shape of two recesses 8 formed in two opposed sides of the hinge means 2 and only one of which appears from Fig. 1, and of two curved cam faces 9, only one of which appears from Fig. 1, formed one on each one of said sides of the hinge means 2 adjacent the recesses 8. Finally, the locking device also comprises a force-exerting means in the shape of a tension spring 10 extending from the shaft 4 to an upper end 11 of the support leg 1.

As the support leg 1 is being pivoted outwards as illustrated in Fig. 2 the leg will be turned about the pivot pin 3, the tension spring 10 urging the shaft 4 to engage the curved cam faces 9. During this movement, the curved cam faces 9 will guide the movement of the shaft 4 along the support leg 1 in the direction indicated by arrow P1 as allowed by the elongate apertures 5. During the pivotal movement outwards the curved cam face 9 consequently will be operative to displace the shaft 4 against the action of the tension spring 10. It is worth noting that shifting of the support leg 1 from its inwards folded to its outwards folded position is effected only by pivoting the leg.

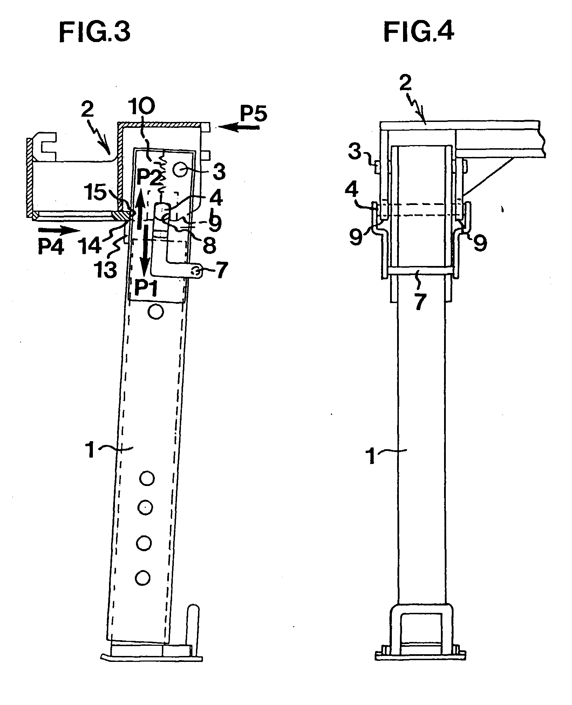

When the support leg 1 reaches the outwards folded position, illustrated in Figs 3 and 4, the tension spring 10 ensures displacement of the shaft 4 in the direction illustrated by arrow P2 for engagement with the recesses 8 formed in the hinge means 2, said engagement being possible by the provision of the recesses 8 immediately adjacent the curved cam faces 9. The curved cam faces 9 are configured to relieve the shaft 4 at the very moment the support leg 1 reaches its outwards folded position, allowing the tension spring 10 to pull the shaft 4 into the recesses 8. This locks the support leg 1 in the outwards folded position thereof.

Figs 1-3 show a shoulder 13 mounted on the support leg 1. In the outwards folded position of the support leg 1 the shoulder 13 will be positioned immediately adjacent and below a face 14 formed on the hinge means 2. When the load carrier is supported by support legs 1 this face 14 will be caused to abut against the shoulder 13, the latter in this case transferring the main part of the load from the load carrier to the support leg 1. This relieves the shaft 4 from exposure to heavy stress in the longitudinal direction of the support leg 1.

Figs 1-3 also show a second face 15 in the hinge means 2 which abuts against the support leg 1 in the outwards folded position thereof. This face 15 will transfer forces directed as indicated by arrow P4 in Fig. 3 to the support leg 1. Only forces emanating from the load carrier and directed in as indicated by arrow P5 will be transferred to the support leg 1 via the shaft 4 and the recesses 8. However, these forces may be of such a magnitude that the pressure of contact between the shaft 4 and the recesses 8 and the elongate apertures 5, respectively, becomes detrimental to the shaft 4, should the latter have a circular cross-sectional configuration in the area of the contact surfaces. For this reason the shaft 4 is bevelled on two diametrically opposite faces 16a, 16b as clearly apparent from Fig. 6. The essential feature of the bevels is that one bevelled face 16a presents a flat surface of contact between the shaft 4 and the recesses 8 and elongate apertures 5, respectively, thus distributing the pressure of contact of the forces acting in the direction illustrated by arrow P5 over a larger area.

Fig. 5, to which reference is now made, illustrates dislodging of the shaft 4 from the recesses 8 by means of the handle 7 in order to pivot the support leg to its inwards folded position. After the load carrier having been raised by means of a loading truck hoisting device (not shown), lifting the support leg 1 off the ground, the handle 7 is moved in the direction illustrated by arrow P3, causing the unit formed by the shaft 4 and the handle 7 to pivot about a transitional area between the curved cam faces 9 and the recesses 8. This pivotal movement will displace the shaft 4 in the elongate apertures 5 in the direction illustrated by arrow P1, dislodging the shaft 4 from the recesses 8 and liberating the support leg 1. As appears from Fig. 5 the support leg 1 is pivotally connected to the hinge means 2 via the pivot pin 3. The pivot pin 3 is located at one corner of the support leg 1, ensuring that the support leg 1 will pivot somewhat by gravitational force in the inwards folded direction when liberated. In doing so, the shaft 4 will be urged towards the curved cam faces 9 whereby under the action of the tension spring 10 the shaft will come into contact with the cam faces upon release of the handle 7. Thereafter the support leg 1 may be pivoted to the inwards folded position in which it is secured to a suitable suspension device (not shown).

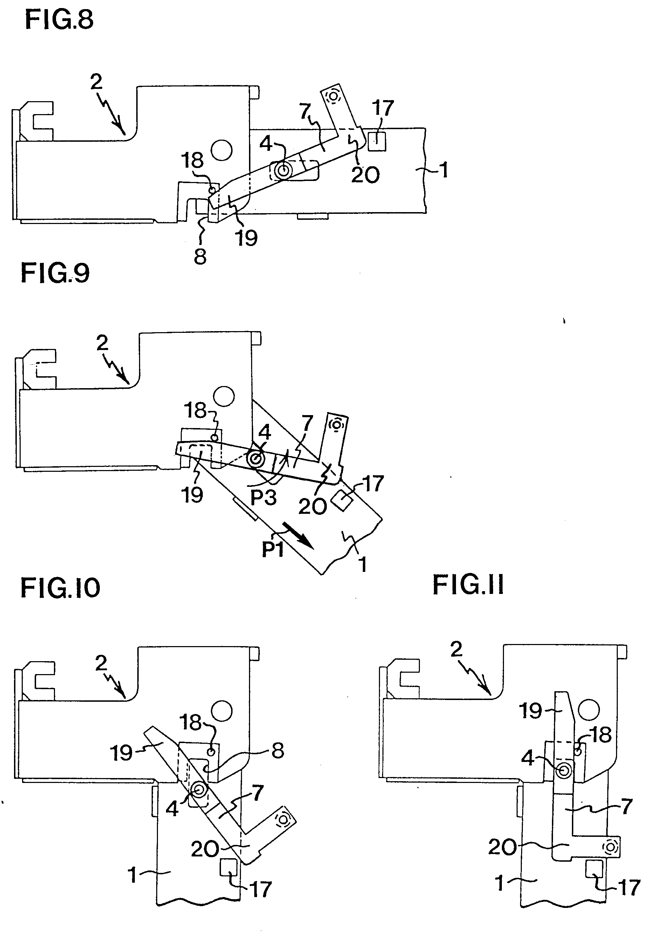

Figs 8-11 illustrate a safety device for retaining the locking device in the locked position thereof in the event of the tension spring 10 becoming ineffective.

The safety device comprises two shoulders 17, only one of which is shown and which are mounted one on either side of the support leg 1 immediately adjacent to and below the handle 7 of the shaft 4, and a pin 18 mounted on the hinge means 2. Further, one side of the handle 7 is formed with a prolonged portion 19 extending past the shaft 4.

In the inwards-folded position of the support leg 1 appearing from Fig. 8 the prolonged portion 19 of the handle 7 has been brought into contacting relationship with the pin 18, the handle 7 having been pivoted about its pivot point on the shaft 4.

When the support leg 1 is pivoted outwards, as appears from Figs 9 and 10, the prolongation portion 19 initially has continued abutment contact with the pin 18, causing the handle 7 to pivot further somewhat about the shaft 4 in the direction indicated by arrow P3. This will cause the lower part 20 of the handle 7 to move, out of contact with the shoulders 17, allowing displacement of the shaft 4 in the direction illustrated by arrow P1.

When the support leg 1 reaches the outwards folded position the shaft 4 will be retracted into the recesses 8 and the shoulders 17 be positioned so as to allow the handle to assume the position illustrated in Fig. 11.

In the event of spring fracture while the support leg 1 assumes its outwardly folded locked position the handle 7 will be moved into abutment against the shoulders 17, the latter preventing the shaft 4 from moving in the direction of arrow P1 in Fig. 3 and causing disengagement from the recesses 8.

This safety device consequently eliminates the risk that in the outwards folded position of the support leg 1 the locking device will be dislodged from its locked position, should the spring come ineffective. In addition, the safety device is designed to allow automatic locking of the support leg 1 when in its outwards folded position without requiring any manual involvement whatsoever.

In the manner indicated, an arrangement in a support leg has been obtained which automatically locks the support leg in outwards folded position while at the same time eliminating the risk that the support leg will be unintentionally pulled out of its locked position. In addition, the arrangement is of simple construction and consequently the manufacturing costs are low.

Obviously, it is possible to realise the invention in other manners than indicated. For instance, the hinge means need not be movably mounted on a load carrier. Nor is it necessary to position the handle on the shaft in the manner described. Finally, the first locking means need not be a shaft but could equally well be configured as a shoulder mounted in an external groove in the support leg.

Also other modifications of the invention are possible and the subsequent claims are intended to encompass all changes and modifications that fall within the scope of the invention.

## Claims

1. An arrangement in a support leg (1) for a load carrier, such as a loading platform, said support leg (1) being connected to a hinge means (2) for movement between an inwards folded and an outwards folded position merely by pivoting, said arrangement comprising a locking device for locking the support leg (1) in the outwards folded position thereof, **characterised** in that the locking device comprises first locking means (4) mounted on the support leg (1) in such a manner as to be movable along the longitudinal axis (6) of said leg, and a second locking means (8) matching the first locking means (4) and formed in the hinge means (2), said first locking means (4) being arranged, by cooperation with the hinge means (2) to be displaced along the longitudinal axis (6) of the support leg (1) upon pivoting outwards of the support leg (1) for engagement with the second locking means (8) and thus effect said locking.

2. An arrangement according to claim 1, **characterised** by a force-exerting means (10) operative to retain the first locking means (4) and the second locking means (8) in engaged relationship, when the support leg (1) assumes its outwards folded position.

3. An arrangement according to claim 2, **characterised** in that the force-exerting means (10) comprises a tension spring (10) extending from the first locking means (4) to an upper end (11) of the support leg (1).

4. An arrangement according to claim 2 or 3, **characterised** in that the force-exerting means (10) is arranged, upon folding outwards of the support leg (1), to urge the first locking means (4) into engagement with a curved cam face (9) formed on the hinge means (2), whereby the displacement of said first locking means (4) along the longitudinal axis (6) of the support leg (1) is guided by said cam curve (9).

5. An arrangement according to claim 4, **characterised** in that the second locking means (8) is formed immediately adjacent the curve cam face (9) for locking engagement with the first locking means (4), when the support leg (1) while pivoting reaches its outwards folded position.

6. An arrangement as claimed in any one of the preceding claims, **characterised** in that the first locking means (4) comprises a shaft (4) extending transversely through the support leg (1) widthwise with respect to the load carrier via two elongate apertures (5) formed in opposed sides of the support leg (1), said elongate apertures extending in the longitudinal direction of the support leg (1) and allowing said displacement of the first locking means (4).

7. An arrangement as claimed in any one of the preceding claims, **characterised** in that the second locking means (8) comprises a recess (8) adapted for reception therein of a part of the first locking means (4) in the outwards folded position of said support leg (1).

8. An arrangement as claimed in any one of the preceding claims, **characterised** by a safety device (12; 17, 18, 19) arranged, in the event of a breakdown of the force-exerting means (10), to prevent the shaft (4) from being displaced in the longitudinal direction of the support leg (1), when the latter assumes its outwards folded position.

9. An arrangement as claimed in claim 8, **characterised** in that the safety device (17, 18, 19) is arranged to allow displacement of the shaft (4) in the direction of said support leg (1) while the latter is being pivoted to its outwards folded position (1).
